(19) Europäisches Patentamt
European Patent Office
Office européen des brevets

(11) EP 4 385 657 A1

(12) **EUROPEAN PATENT APPLICATION**

(43) Date of publication:
**19.06.2024 Bulletin 2024/25**

(21) Application number: **23212028.7**

(22) Date of filing: **24.11.2023**

(51) International Patent Classification (IPC):
**B23Q 15/013** $^{(2006.01)}$  **B25J 9/16** $^{(2006.01)}$
**B23P 19/06** $^{(2006.01)}$

(52) Cooperative Patent Classification (CPC):
**B25J 9/1687; B23Q 15/013; B25J 9/1633;**
G05B 2219/45091

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.12.2022 JP 2022198026**

(71) Applicant: **OMRON Corporation
Kyoto 600-8530 (JP)**

(72) Inventor: **BIWAKI, Shu
Kyoto-shi, 600-8530 (JP)**

(74) Representative: **Mewburn Ellis LLP
Aurora Building
Counterslip
Bristol BS1 6BX (GB)**

(54) **ROBOT SYSTEM AND CONTROLLER**

(57) A robot system includes a robot to which a screw tightening driver for screw tightening is attached as an end effector and a controller that controls the robot. The controller includes a first command generation module that generates a command for rotation of the screw tightening driver in accordance with a predetermined operation profile and a second command generation module that generates a command to move the screw tightening driver along a predetermined direction by displacement calculated in accordance with the command generated by the first command generation module.

FIG.1

**Description**

INTRODUCTION

In the field of industrial automation, a robot is used in various applications. Depending on an application, control of the robot as accurate as possible is demanded.

Screw tightening processing represents an exemplary application of the robot. For example, Japanese Patent Laying-Open No. 2021-122867 discloses an automatic screw tightening apparatus that can lessen impact torque caused at the time of seating by controlling by switching a rotation velocity of a bit engaged with a screw before the screw is seated on a workpiece in screwing of the screw into the workpiece.

SUMMARY

The background art described above discloses a configuration to switch the rotation velocity (setting value) of the bit. Mechanical disturbance such as resistance caused in a screw tightening process, however, may vary an actual rotation velocity of the bit. When the rotation velocity of the bit is varied, a velocity of downward movement of a screw tightening driver or a height thereof should also be adjusted in conformity with the variation. Time and efforts are required for adjustment of the velocity of downward movement of the screw tightening driver or the height thereof in accordance with such a rotation velocity of the bit.

The present invention provides a technique for positioning of a screw tightening driver in coordination with rotation of a screw.

A robot system according to one embodiment includes a robot to which a screw tightening driver for screw tightening is attached as an end effector and a controller that controls the robot. The controller includes a first command generation module that generates a command for rotation of the screw tightening driver in accordance with a predetermined operation profile and a second command generation module that generates a command to move the screw tightening driver along a predetermined direction by displacement calculated in accordance with the command generated by the first command generation module.

According to this configuration, a position of the screw based on engagement of the screw can be controlled by rotation of the screw tightening driver in accordance with the predetermined operation profile. In addition, an appropriate position of the screw tightening driver can be determined in accordance with the position of the screw.

The operation profile may define change in cumulative angle of the screw tightening driver with respect to time. According to this configuration, a process of engagement of the screw can be controlled in accordance with a purpose.

The second command generation module may output as the command, second displacement calculated by multiplying first displacement indicated by the command generated by the first command generation module by a coefficient. According to this configuration, the second displacement with linearity thereof being maintained with respect to the first displacement indicated by the command generated by the first command generation module can be outputted as the command.

The coefficient may be determined depending on a lead of a screw rotationally driven by the screw tightening driver. Preferably, a distance over which the screw advances can appropriately be calculated in correspondence with the number of times of rotation of the screw.

A corresponding coefficient among a plurality of coefficients may be selected in accordance with a type of the screw rotationally driven by the screw tightening driver. Preferably, appropriate control can be achieved even when the robot handles a plurality of types of screws.

A processor of the controller may be configured to execute a control program. The control program may include functional blocks that define the first command generation module and the second command generation module, respectively. According to this configuration, positioning of the screw tightening driver in coordination with rotation of the screw tightening driver can be achieved simply by incorporating the functional blocks into the control program.

According to another embodiment, a controller that controls a robot to which a screw tightening driver for screw tightening is attached as an end effector is provided. The controller includes a first command generation module that generates a command for rotation of the screw tightening driver in accordance with a predetermined operation profile and a second command generation module that generates a command to move the screw tightening driver along a predetermined direction by displacement calculated in accordance with the command generated by the first command generation module.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a schematic diagram showing an exemplary overall configuration of a robot system according to the present embodiment.
Fig. 2 is a schematic diagram showing an exemplary hardware configuration of the robot system according to the present embodiment.
Fig. 3 is a schematic diagram showing an exemplary functional configuration provided by a control program for the robot system according to the present embodiment.

Figs. 4A to 4C are time charts showing an exemplary operation profile of a screw tightening driver of the robot system according to the present embodiment.

Fig. 5 is a diagram for illustrating a screw lead in the robot system according to the present embodiment.

Fig. 6 is a diagram showing an exemplary control program for implementing the exemplary functional configuration shown in Fig. 3.

Figs. 7A to 7E are schematic diagrams showing exemplary operations of the robot system according to the present embodiment.

Figs. 8A to 8C are time charts showing exemplary operations of the robot system according to the present embodiment.

Fig. 9 is a flowchart showing an exemplary procedure of creation of a control program executed in a robot controller of the robot system according to the present embodiment.

DETAILED DESCRIPTION

An embodiment of the present invention will be described in detail with reference to the drawings. The same or corresponding elements in the drawings have the same reference characters allotted and description thereof will not be repeated.

<A. Exemplary Overall Configuration of Robot System>

An exemplary overall configuration of a robot system 1 according to the present embodiment will initially be described.

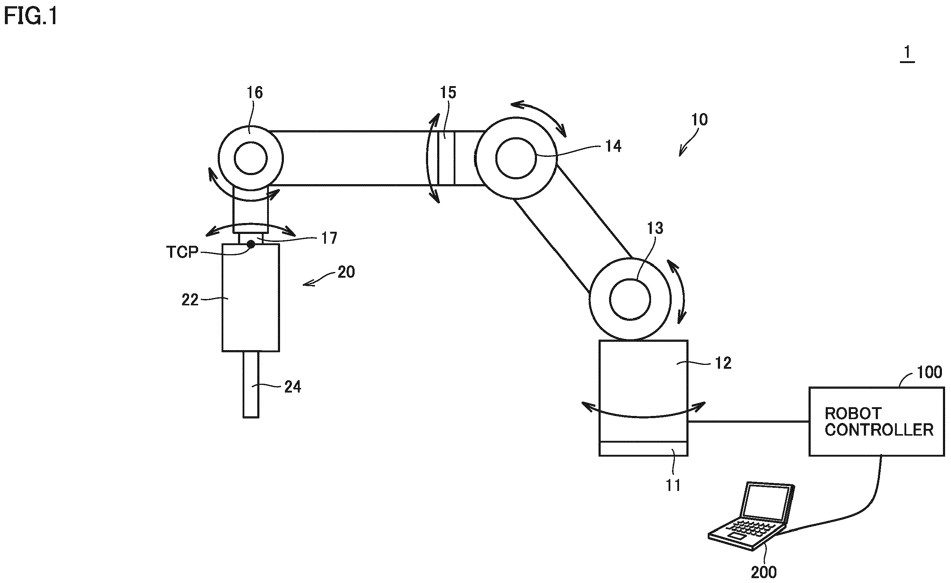

Fig. 1 is a schematic diagram showing the exemplary overall configuration of robot system 1 according to the present embodiment. Referring to Fig. 1, robot system 1 includes an articulated robot (hereinafter simply referred to as a "robot 10") and a robot controller 100 that controls robot 10.

Robot 10 includes a base 11 and a plurality of movable portions 12, 13, 14, 15, 16, and 17. Movable portions 12, 13, 14, 15, 16, and 17 correspond to joints of robot 10. Each of movable portions 12, 13, 14, 15, 16, and 17 drives a link constituting robot 10 along a rotation axis as illustrated in Fig. 1.

A screw tightening driver 20 for screw tightening is attached as an end effector to robot 10. More specifically, screw tightening driver 20 as the end effector is attached to a tip of an arm of robot 10.

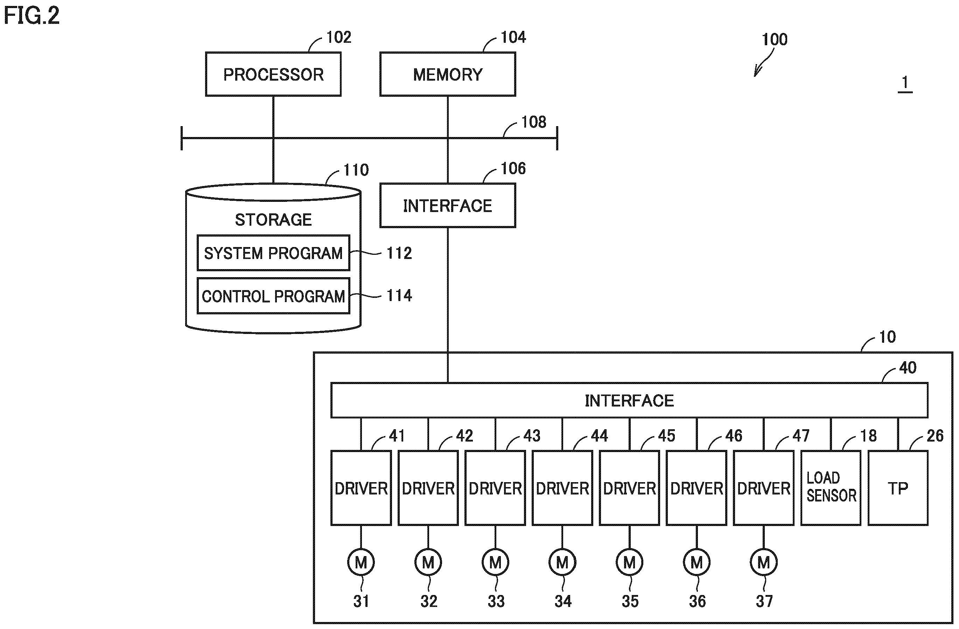

Screw tightening driver 20 includes a rotational drive portion 22 and a driver bit 24 mechanically connected to rotational drive portion 22. Driver bit 24 is engaged with a hole provided in a head of a screw and the screw is rotationally driven by rotational drive portion 22 with driver bit 24 being interposed. Rotational drive portion 22 contains a motor 37 (see Fig. 2) which will be described later.

A load sensor 18 (see Fig. 2) that detects a load generated in the end effector (screw tightening driver 20) may be provided in a portion where the end effector is attached to the arm of robot 10 or in the vicinity thereof.

An information processing apparatus 200 may be connected to robot controller 100. Information processing apparatus 200 which is typically a general-purpose computer presents information from robot controller 100 to a user and gives any command to robot controller 100 according to a user operation.

<B. Hardware Configuration Example of Robot System>

An exemplary hardware configuration of robot system 1 according to the present embodiment will now be described.

Fig. 2 is a schematic diagram illustrating a hardware configuration example of robot system 1 according to the present embodiment. Referring to Fig. 2, robot 10 includes motors 31, 32, 33, 34, 35, and 36 corresponding to movable portions 12, 13, 14, 15, 16, and 17, respectively, and drivers 41, 42, 43, 44, 45, and 46 that drive motors 31, 32, 33, 34, 35, and 36, respectively.

Robot 10 also includes a driver 47 that drives motor 37 provided in screw tightening driver 20.

Robot 10 further includes load sensor 18 and a teaching pendant 26. Load sensor 18 detects a load generated in the end effector or the like. Teaching pendant 26 performs teaching or the like of robot 10 according to a user operation. Teaching pendant 26 may be constructed as being attachable to and removable from robot 10.

Drivers 41, 42, 43, 44, 45, 46, and 47, load sensor 18, and teaching pendant 26 are electrically connected to robot controller 100 with an interface 40 being interposed.

Robot controller 100 is a kind of computer, and includes a processor 102, a memory 104, an interface 106, and a storage 110 as main hardware components. These components are electrically connected via a bus 108.

Processor 102 typically includes a central processing unit (CPU), a micro processing unit (MPU), and the like. Memory 104 typically includes a volatile storage device such as a dynamic random access memory (DRAM) or a static random access memory (SRAM). Storage 110 typically includes a non-volatile storage device such as a solid state disk (SSD) or a flash memory. Storage 110 stores a system program 112 for achieving basic processing and a control program 114. Control program 114 includes computer-readable instructions for controlling robot 10. Processor 102 reads system program 112 and control program 114 stored in storage 110, expands the programs in main memory 104, and executes the programs, thereby implementing processing for controlling robot 10 as described later.

Interface 106 exchanges signals and/or data between robot controller 100 and robot 10. In robot system 1, commands for controlling drivers 41, 42, 43, 44, 45, 46, and 47 are transmitted from robot controller 100 to robot 10, and detection results of load sensor 18 are transmitted from robot 10 to robot controller 100.

Although Fig. 2 illustrates the configuration example in which necessary processing is provided by processor 102 executing the program, a part or all of the provided processing may be implemented using a dedicated hardware circuit (for example, an application specific integrated circuit (ASIC), a field-programmable gate array (FPGA), or the like).

Although Fig. 2 illustrates an example in which robot controller 100 is provided independently of robot 10, some or all of the functions and processes provided by robot controller 100 may be incorporated in robot 10. In this case, robot controller 100 may be mounted as a controller dedicated to robot control, or may be mounted using a general-purpose programmable controller (PLC) or a personal computer.

Further, some or all of the functions and processes provided by robot controller 100 may be achieved by using computing resources on a network called cloud.

As described above, robot system 1 according to the present embodiment may be mounted in any manner.

<C. Synchronization Control of Robot System>

Synchronization control of robot system 1 according to the present embodiment will now be described.

As a typical operation of robot 10 to which screw tightening driver 20 is attached as the end effector, an operation to change the position of screw tightening driver 20 in conformity with rotational drive of the screw by screw tightening driver 20 and movement of the screw toward a screw hole as a result of rotational drive is assumed. In order to perform such an operation, the position of screw tightening driver 20 should be changed in coordination with movement of the screw toward the screw hole.

In general, a spring is provided between rotational drive portion 22 and driver bit 24, and a distance therebetween increases with external force applied to driver bit 24. By adopting such a mechanism, while the position of screw tightening driver 20 is fixed, movement of the screw by rotational drive is accommodated. In adoption of this construction, a spring or a spring washer should appropriately be selected and adjusted. In order to do so, however, experiences to some extent are required, and a user with poor knowledge is unable to do so with ease.

Robot system 1 according to the present embodiment provides a configuration that more readily allows control for synchronization between an operation of screw tightening driver 20 and an operation of robot 10.

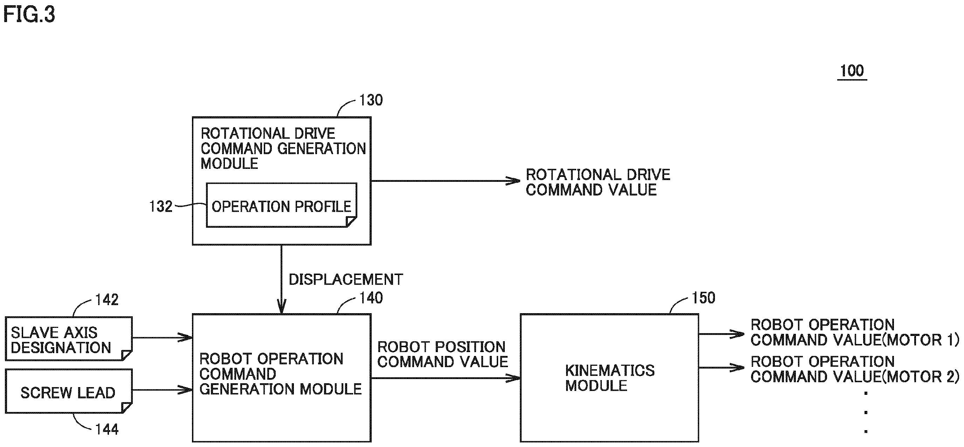

Fig. 3 is a schematic diagram showing an exemplary functional configuration provided by a control program 114 for robot system 1 according to the present embodiment. A module shown in Fig. 3 is typically implemented by execution of control program 114 by processor 102 of robot controller 100.

Referring to Fig. 3, robot controller 100 includes a rotational drive command generation module 130, a robot operation command generation module 140, and a kinematics module 150 as the functional configuration.

Rotational drive command generation module 130 generates a rotational drive command value in accordance with a predetermined operation profile 132. Specifically, rotational drive command generation module 130 generates a command for rotation of screw tightening driver 20 (rotational drive portion 22) in accordance with operation profile 132. The rotational drive command value may be, for example, a rotation angle (rotation position), the number of rotations, a rotation velocity, or the like for each control cycle, for motor 37 of rotational drive portion 22.

Rotational drive command generation module 130 outputs displacement in accordance with the rotational drive command value generated in accordance with operation profile 132. The displacement is calculated in accordance with operation profile 132.

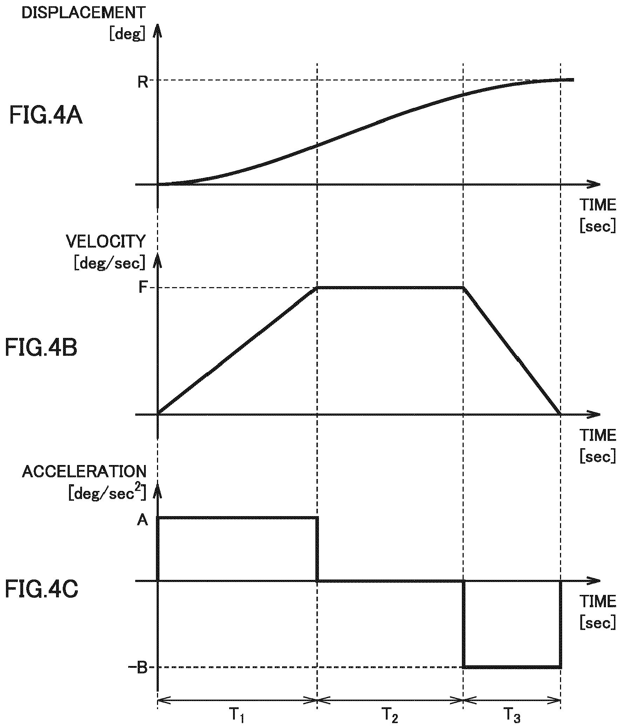

Figs. 4A to 4C are time charts showing exemplary operation profile 132 of screw tightening driver 20 of robot system 1 according to the present embodiment. Fig. 4A shows a cumulative angle (displacement) of rotational drive portion 22, Fig. 4B shows the rotation velocity of rotational drive portion 22, and Fig. 4C shows a rotation acceleration of rotational drive portion 22.

As shown in Figs. 4A to 4C, rotational drive portion 22 rotates until the cumulative angle reaches R [deg] during periods T1, T2, and T3. Period T1 is an acceleration period, period T2 is a period of operation at a constant velocity, and period T3 is a deceleration period.

A duration of each of periods T1, T2, and T3 and cumulative angle R can freely be set.

As shown in Fig. 4A, operation profile 132 may define change in cumulative angle of screw tightening driver 20 (rotational drive portion 22) with respect to time. Alternatively, as shown in Figs. 4B and 4C, the operation profile may define change in rotation velocity and rotation acceleration of screw tightening driver 20 (rotational drive portion 22) with respect to time.

Referring again to Fig. 3, robot operation command generation module 140 generates a robot position command value. The robot position command value is generally a value (a position in three dimensions and an attitude in the three dimensions) that designates the position and the attitude of the tip of the arm (tool center point (TCP)) (see Fig. 1), and it may be a coordinate value in a global coordinate system or a coordinate value in a robot coordinate system.

Robot operation command generation module 140 calculates the robot position command value in accordance with the displacement from rotational drive command generation module 130 and a screw lead 144, for an axis designated by slave axis designation 142.

Specifically, robot operation command generation module 140 generates a command to move screw tightening driver 20 along a predetermined direction by the displacement calculated in accordance with a robot operation command generated by rotational drive command generation module 130.

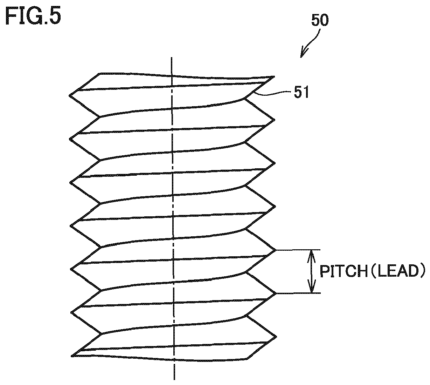

Fig. 5 is a diagram for illustrating screw lead 144 in robot system 1 according to the present embodiment. Referring to Fig. 5, a groove 51 is provided in a screw 50. A distance (pitch) between adjacent grooves 51 corresponds to the "lead" of screw 50. The lead means a distance of advance of screw 50 in an axial direction when screw 50 makes one rotation.

In an example shown in Fig. 5, when screw 50 makes one rotation, screw 50 moves toward the screw hole by one pitch. This amount of movement corresponds to the lead. The lead may be the same as the pitch, however, it may not be the same depending on a structure of screw 50.

When the cumulative angle (the number of times of rotation) and the lead of screw 50 can be specified, the distance over which screw 50 moves toward the screw hole can accurately be calculated.

For example, an example in which screw tightening driver 20 attached to the tip of the arm of robot 10 moves along a direction of advance of screw 50 (assumed, for example, as a Z-axis direction) in coordination with rotation of rotational drive portion 22 is assumed.

The position in the Z-axis direction of screw tightening driver 20 is determined in coordination with the cumulative angle (displacement) of rotational drive portion 22 of screw tightening driver 20. More specifically, a value calculated by multiplying a cumulative angle $R_D(t)$ [deg] of rotational drive portion 22 by a lead L is the displacement given to robot 10. More specifically, a robot position command $P_{RZ}(t)$ is calculated as below.

$$P_{RZ}(t) = P_{RZS} + L \times R_D(t)/360$$

An operation start position $P_{RZS}$ represents a position of robot 10 at which the robot starts a screw tightening operation.

Robot operation command generation module 140 thus outputs as the robot position command value, the displacement calculated by multiplying the displacement indicated by the rotational drive command value generated by rotational drive command generation module 130 by a coefficient. At this time, the coefficient such as screw lead 144 may be determined depending on the lead of screw 50 rotationally driven by screw tightening driver 20.

A plurality of screw leads 144 may be prepared in accordance with the type of the screw. In this case, one of the plurality of prepared screw leads 144 is selected in accordance with a screw of interest. In other words, a corresponding coefficient among a plurality of coefficients (screw leads 144) may be selected in accordance with the type of screw 50 rotationally driven by screw tightening driver 20.

As set forth above, in robot system 1 according to the present embodiment, the tip of the arm of robot 10 operates in coordination with rotation of rotational drive portion 22. Therefore, the position of screw tightening driver 20 can appropriately be controlled with advance of screw 50.

Kinematics module 150 calculates a robot operation command value that supports a position or an angle of each joint based on the robot position command value from robot operation command generation module 140, in accordance with kinematics of robot 10.

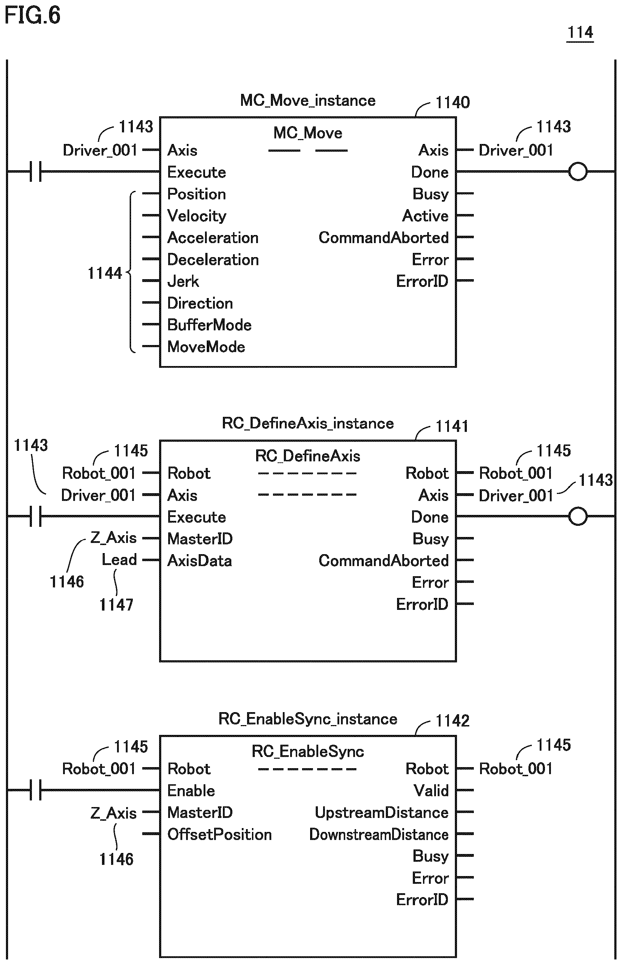

Fig. 6 is a diagram showing exemplary control program 114 for implementing the exemplary functional configuration shown in Fig. 3. Referring to Fig. 6, control program 114 includes a functional block 1140 for designation of operation profile 132, a functional block 1141 for setting of a master axis, and a functional block 1142 for synchronization control of the robot.

Functional block 1140 is an instruction for defining rotational drive command generation module 130 (Fig. 3). More specifically, an axis controlled in accordance with operation profile 132 is designated in functional block 1140. In the example shown in Fig. 6, a variable 1143 indicating screw tightening driver 20 (motor 37 that drives rotational drive portion 22) is set at each of an Axis input and an Axis output of functional block 1140.

Operation profile 132 is set in functional block 1140. In the example shown in Fig. 6, information indicating operation profile 132 is inputted to a plurality of inputs 1144 such as Position, Velocity, acceleration, Deceleration, Jerk, Direction, BufferMode, MoveMode, and the like of functional block 1140.

Functional block 1141 and functional block 1142 are instructions for defining robot operation command generation module 140 (Fig. 3).

A robot and an axis that operate in a manner following a master axis are designated in functional block 1141. In the example shown in Fig. 6, a variable 1145 indicating a robot of interest is set at each of a Robot input and a Robot output of functional block 1141, and a variable indicating the Z axis is designated at a MasterID input of functional block 1141.

The master axis is designated in functional block 1141. In the example shown in Fig. 6, variable 1143 indicating screw tightening driver 20 (motor 37 that drives rotational drive portion 22) is set at each of the Axis input and the Axis output of functional block 1141.

Furthermore, information for coordination between the master axis and a slave axis is designated in functional block 1141. In the example shown in Fig. 6, a variable 1147 indicating a ratio between displacement of the master axis and displacement caused in the slave axis is set at an AxisData input of functional block 1141.

Functional block 1142 is an instruction for activating synchronization control. As an Enable input of functional block 1142 is activated, robot 10 is controlled to be in synchronization in coordination with the operation of screw tightening driver 20.

<D. Exemplary Operation>

An exemplary operation of robot system 1 according to the present embodiment will now be described.

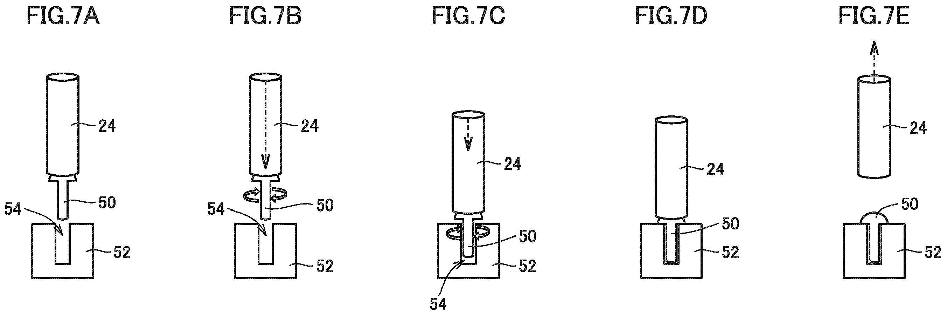

Figs. 7A to 7E are schematic diagrams showing exemplary operations of robot system 1 according to the present embodiment. Figs. 7A to 7E show an example in which robot 10 assembles screw 50 to a screw hole 54 provided in a workpiece 52 to which the screw is to be assembled. For the sake of convenience of description, robot 10 itself is not shown but driver bit 24 of screw tightening driver 20 attached to the tip of the arm of robot 10 is mainly shown.

Initially, robot controller 100 gives a control command to robot 10 to move screw tightening driver 20 to a position of start of approach to workpiece 52 while screw 50 is attached to driver bit 24 (for example, screw tightening driver 20 is provided with a not-shown attachment-by-suction structure) (see Fig. 7A).

In succession, robot controller 100 activates control for synchronization between screw tightening driver 20 and robot 10 (see Fig. 7B). Specifically, robot controller 100 gives screw tightening driver 20 a command for rotational drive of rotational drive portion 22 in accordance with operation profile 132 and gives robot 10 a command for movement of screw tightening driver 20 to a position in accordance with the number of times of rotation (displacement) of rotational drive portion 22.

Robot controller 100 lowers the rotation velocity of rotational drive portion 22 before a seating surface of the head of screw 50 is seated in workpiece 52 or an object to be fastened, in accordance with operation profile 132 (see Fig. 7C). Robot controller 100 then stops the rotation of rotational drive portion 22 in accordance with operation profile 132 while the seating surface of the head of screw 50 is seated (see Fig. 7D).

Screw tightening driver 20 of robot controller 100 thus decelerates immediately before the head of screw 50 is seated. The screw tightening driver then stops at the time when the head of screw 50 is seated. Such a behavior of screw tightening driver 20 is defined in operation profile 132.

Synchronization control may be deactivated when the head of screw 50 is seated.

In succession, robot controller 100 gives robot 10 a control command to move screw tightening driver 20 upward to a prescribed height (Fig. 7E).

Screw tightening processing is completed through such a series of operations.

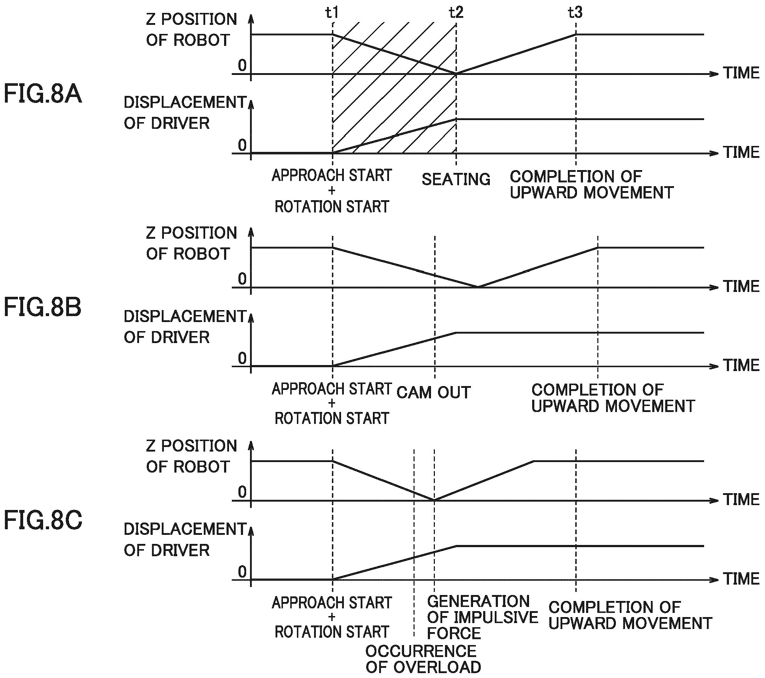

Figs. 8 to 8C are time charts showing exemplary operations of robot system 1 according to the present embodiment. Figs. 8A to 8C each show a time chart of the position in the Z-axis direction of robot 10 and a time chart of the cumulative angle (displacement) of screw tightening driver 20.

Fig. 8A is the time chart of the operation including synchronization control of robot system 1.

At time 11, screw tightening driver 20 of robot 10 starts approach to workpiece 52 from the operation start position. At this time, synchronization control has been activated, and rotational drive portion 22 of screw tightening driver 20 rotates and screw tightening driver 20 moves toward the screw hole in accordance with operation profile 132. At time t2, the rotation velocity of rotational drive portion 22 has stopped in a state where the seating surface of the head of screw 50 is seated.

Thereafter, screw tightening driver 20 of robot 10 moves upward and upward movement is completed at time t3.

Figs. 8B and 8C show the time charts when rotation control of screw tightening driver 20 and position control of screw tightening driver 20 are not appropriately adjusted, rather than synchronization control in accordance with the present embodiment.

More specifically, the time chart shown in Fig. 8B shows an example of delay of movement of screw tightening driver 20 as compared with advance of the screw by screw tightening driver 20. As shown in Fig. 8B, as movement of screw tightening driver 20 is delayed as compared with movement of the screw toward the screw hole as a result of rotational drive of the screw, cam out which is disengagement of driver bit 24 and the head of the screw from each other may occur.

The time chart shown in Fig. 8C shows an example in which screw tightening driver 20 moves fast as compared with advance of the screw by screw tightening driver 20. As shown in Fig. 8C, as movement of screw tightening driver 20 is greater relative to movement of the screw toward the screw hole as a result of rotational drive of the screw, excessive load may be applied from driver bit 24 to the head of the screw and impulsive force may be generated at the time of seating or the like.

In contrast, synchronization control according to the present embodiment determines the position of screw tightening driver 20 in coordination with rotation of screw tightening driver 20. Therefore, the screw can appropriately be tightened without adjustment by trial and error.

<E. Exemplary Procedure of Creation of Control Programming>

An exemplary procedure of creation of control program 114 executed in robot controller 100 of robot system 1 according to the present embodiment will now be described.

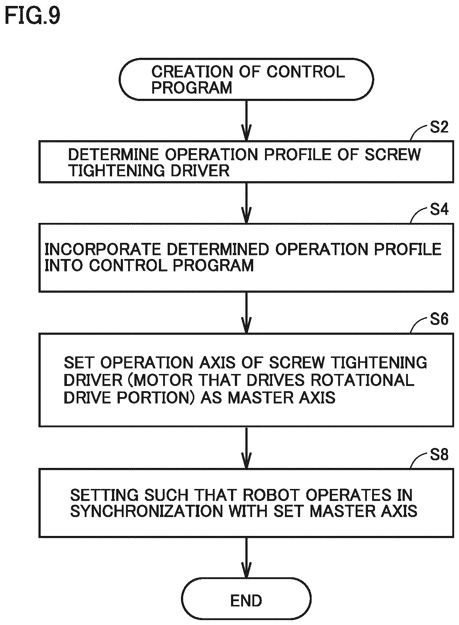

Fig. 9 is a flowchart showing an exemplary procedure of creation of control program 114 executed in robot controller 100 of robot system 1 according to the present embodiment. Referring to Fig. 9, a user determines operation profile 132 of screw tightening driver 20 (step S2). Operation profile 132 of screw tightening driver 20 may be designed in accordance with a screw of interest or may be obtained by measurement of an actual operation of screw tightening driver 20.

In succession, the user incorporates determined operation profile 132 into control program 114 (step S4) and sets an operation axis (motor 37 that drives rotational drive portion 22) of screw tightening driver 20 as the master axis (step S6). Setting of the master axis is described in control program 114.

The user then makes setting such that robot 10 operates in synchronization with the set master axis (step S8). Setting of the operation is described in control program 114.

Control program 114 is created through the processing procedure as set forth above.

<F. Advantages>

According to the present embodiment, the screw tightening driver is rotated in accordance with the predetermined operation profile, so that the position of the screw by engagement of the screw can be controlled. In addition, the appropriate position of the screw tightening driver can be determined in accordance with the position of the screw. The operation profile is appropriately designed so that possibility of generation of impulsive force at the time of seating of the screw or the like can be lowered without the need for a sensor or the like.

The rotation velocity of the screw tightening driver may be varied by mechanical disturbance such as friction caused in a reduction gear or resistance caused between the screw and the screw hole. According to the present embodiment, even in such a case, the velocity or the position (the velocity of downward movement or the height by way of example) of the screw tightening driver can automatically be adjusted in accordance with the mechanical disturbance. Such automatic adjustment of the velocity or the position of the screw tightening driver can prevent, without bothersome adjustment, cam out due to delayed downward movement of the screw tightening driver (inability to follow the advance of the screw) and any damage on the head of the screw due to fast downward movement of the screw tightening driver (excessive pressing of the screw).

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

**Claims**

1. A robot system (1) comprising:

   a robot (10) to which a screw tightening driver (20) for screw tightening is attached as an end effector; and
a controller (100) configured to control the robot, wherein
the controller comprises

   a first command generation module (130) configured to generate a command for rotation of the screw tightening driver in accordance with a predetermined operation profile (132), and
   a second command generation module (140) configured to generate a command to move the screw tightening driver along a predetermined direction by displacement calculated in accordance with the command generated by the first command generation module.

2. The robot system according to claim 1, wherein the operation profile is configured to define change in cumulative angle of the screw tightening driver with respect to time.

3. The robot system according to claim 1 or 2, wherein the second command generation module outputs as the command, second displacement calculated by multiplying first displacement indicated by the command generated by the first command generation module by a coefficient (144).

4. The robot system according to claim 3, wherein the coefficient is determined depending on a lead of a screw rotationally driven by the screw tightening driver.

5. The robot system according to claim 4, wherein a corresponding coefficient among a plurality of coefficients is selected in accordance with a type of the screw rotationally driven by the screw tightening driver.

6. The robot system according to any one of claims 1 to 5, wherein

   a processor of the controller is configured to execute a control program (114), and
   the control program includes functional blocks (1140, 1141, 1142) that define the first command generation module and the second command generation module, respectively.

7. A controller (100) configured to control a robot (10) to which a screw tightening driver (20) for screw tightening is attached as an end effector, the controller comprising:

   a first command generation module (130) configured to generate a command for rotation of the screw tightening driver in accordance with a predetermined operation profile; and
a second command generation module (140) configured to generate a command to move the screw tightening driver along a predetermined direction by displacement calculated in accordance with the command generated by the first command generation module.

8. The controller according to claim 7, wherein
the operation profile configured to define change in cumulative angle of the screw tightening driver with respect to time.

9. The controller according to claim 7 or 8, wherein
the second command generation module configured to output as the command, second displacement calculated by multiplying first displacement indicated by the command generated by the first command generation module by a coefficient (144).

10. The controller according to claim 9, wherein
the coefficient is determined depending on a lead of a screw rotationally driven by the screw tightening driver.

11. The controller according to claim 10, wherein
a corresponding coefficient among a plurality of coefficients is selected in accordance with a type of the screw rotationally driven by the screw tightening driver.

12. The controller according to any one of claims 7 to 11, wherein

a processor of the controller is configured to execute a control program (114), and
the control program includes functional blocks (1140, 1141, 1142) that define the first command generation module and the second command generation module, respectively.

FIG.1

EP 4 385 657 A1

## FIG.2

PROCESSOR — 102

MEMORY — 104

— 108

STORAGE — 110

SYSTEM PROGRAM — 112

CONTROL PROGRAM — 114

INTERFACE — 106

100

1

10

40

INTERFACE

DRIVER 41 | DRIVER 42 | DRIVER 43 | DRIVER 44 | DRIVER 45 | DRIVER 46 | DRIVER 47 | LOAD SENSOR 18 | TP 26

M 31 | M 32 | M 33 | M 34 | M 35 | M 36 | M 37

EP 4 385 657 A1

**FIG.3**

DISPLACEMENT
[deg]

R

FIG.4A

TIME
[sec]

VELOCITY
[deg/sec]

F

FIG.4B

TIME
[sec]

ACCELERATION
[deg/sec$^2$]

A

FIG.4C

TIME
[sec]

−B

$T_1$        $T_2$        $T_3$

## FIG.5

## FIG.6

114

MC_Move_instance — 1140

MC_Move

| | |
|---|---|
| Axis — Driver_001 (1143) | Axis — Driver_001 (1143) |
| Execute | Done |
| Position | Busy |
| Velocity | Active |
| Acceleration | CommandAborted |
| Deceleration | Error |
| Jerk | ErrorID |
| Direction | |
| BufferMode | |
| MoveMode | |

1144

RC_DefineAxis_instance — 1141

RC_DefineAxis

| | |
|---|---|
| Robot — Robot_001 (1145) | Robot — Robot_001 (1145) |
| Axis — Driver_001 | Axis — Driver_001 (1143) |
| Execute | Done |
| MasterID — Z_Axis | Busy |
| AxisData — Lead | CommandAborted |
| | Error |
| | ErrorID |

1143, 1146, 1147

RC_EnableSync_instance — 1142

RC_EnableSync

| | |
|---|---|
| Robot — Robot_001 (1145) | Robot — Robot_001 (1145) |
| Enable | Valid |
| MasterID — Z_Axis | UpstreamDistance |
| OffsetPosition | DownstreamDistance |
| | Busy |
| | Error |
| | ErrorID |

1146

FIG.7A  FIG.7B  FIG.7C  FIG.7D  FIG.7E

EP 4 385 657 A1

FIG.8A

Z POSITION
OF ROBOT

t1          t2          t3

0                                        TIME

DISPLACEMENT
OF DRIVER

0                                        TIME

APPROACH START          SEATING    COMPLETION OF
+                                   UPWARD MOVEMENT
ROTATION START

FIG.8B

Z POSITION
OF ROBOT

0                                        TIME

DISPLACEMENT
OF DRIVER

0                                        TIME

APPROACH START  CAM OUT           COMPLETION OF
+                                   UPWARD MOVEMENT
ROTATION START

FIG.8C

Z POSITION
OF ROBOT

0                                        TIME

DISPLACEMENT
OF DRIVER

0                                        TIME

APPROACH START        GENERATION   COMPLETION OF
+                     OF IMPULSIVE  UPWARD MOVEMENT
ROTATION START        FORCE
           OCCURRENCE
           OF OVERLOAD

FIG.9

```
      ┌─────────────────────────┐
      │   CREATION OF CONTROL   │
      │        PROGRAM          │
      └─────────────────────────┘
                   │
                   ▼              ╱S2
      ┌─────────────────────────────────┐
      │ DETERMINE OPERATION PROFILE OF   │
      │ SCREW TIGHTENING DRIVER          │
      └─────────────────────────────────┘
                   │
                   ▼              ╱S4
      ┌─────────────────────────────────┐
      │ INCORPORATE DETERMINED OPERATION │
      │ PROFILE INTO CONTROL PROGRAM     │
      └─────────────────────────────────┘
                   │
                   ▼              ╱S6
      ┌─────────────────────────────────┐
      │ SET OPERATION AXIS OF SCREW      │
      │ TIGHTENING DRIVER (MOTOR THAT    │
      │ DRIVES ROTATIONAL DRIVE PORTION) │
      │ AS MASTER AXIS                   │
      └─────────────────────────────────┘
                   │
                   ▼              ╱S8
      ┌─────────────────────────────────┐
      │ SETTING SUCH THAT ROBOT OPERATES │
      │ IN SYNCHRONIZATION WITH SET      │
      │ MASTER AXIS                      │
      └─────────────────────────────────┘
                   │
                   ▼
            ┌─────────────┐
            │     END     │
            └─────────────┘
```

Europäisches
Patentamt

European
Patent Office

Office européen
des brevets

# EUROPEAN SEARCH REPORT

Application Number

EP 23 21 2028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/215038 A1 (UEDA JUNYA [JP]) 2 August 2018 (2018-08-02) * figures 1,2,12-17 * * paragraphs [0001], [0136] * * paragraph [0213] - paragraph [0226] * ----- | 1-12 | INV. B23Q15/013 B25J9/16 B23P19/06 |

TECHNICAL FIELDS
SEARCHED       (IPC)

B23Q
B25J
G05B

The present search report has been drawn up for all claims

| Place of search | Date of completion of the search | Examiner |
|---|---|---|
| The Hague | 16 April 2024 | Lorenzo Barreiro, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 21 2028

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2024

| Patent document cited in search report | | Publication date | Patent family member(s) | | Publication date |
|---|---|---|---|---|---|
| US 2018215038 | A1 | 02-08-2018 | CN | 108356794 A | 03-08-2018 |
| | | | JP | 6862854 B2 | 21-04-2021 |
| | | | JP | 2018118365 A | 02-08-2018 |
| | | | US | 2018215038 A1 | 02-08-2018 |

EPO FORM P0459

For more details about this annex : see Official Journal of the European Patent Office, No. 12/82

**EP 4 385 657 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021122867 A